# EUROPEAN PATENT APPLICATION

(11) **EP 1 401 230 A1**
(43) Date of publication of application: **24.03.2004**
(21) Application number: 03705396.4
(22) Date of filing: 24.02.2003
(51) Int. Cl.: H04Q 7/38

(54) **BASE STATION DEVICE AND COMMUNICATION TERMINAL DEVICE**

(30) Priority: 01.03.2002 JP 2002055422
(71) Applicant: MATSUSHITA ELECTRIC INDUSTRIAL CO., LTD., Kadoma-shi, Osaka 571-8501 (JP)
(72) Inventor: AOYAMA, Takahisa, Yokohama-shi, Kanagawa 233-0007 (JP)
(74) Representative: Grünecker, Kinkeldey, Stockmair & Schwanhäusser Anwaltssozietät
(86) International application number: PCT/JP2003/001963
(87) International publication number: WO 2003/075598

(57) **Abstract**

The terminal information aggregation section (104) decides whether or not to carry out handover based on a CIR value sent from a communication terminal. When there are at least a predetermined number of communication terminals which should carry out handover, the IDLE period setting decision section (105) requests the setting of an IDLE period. The priority calculation section (106) calculates priority based on the CIR value. The scheduling section (107) carries out a setting and scheduling of the IDLE period. The data selection section (108) selects data to be sent to the scheduled communication terminal and the modulation/coding section (110) codes/modulates the selected data. The transmission ON/OFF section (111) performs control in such a way that data is not sent during the set IDLE period. In this way, according to a CDMA system in which data signals and common known signals are time-multiplexed and sent through the same channel, the present invention makes it possible to receive the common known signals with sufficient reception quality and thereby improve the accuracy of detecting other cells.

## Description

### Technical Field

The present invention relates to a high-speed packet communication using a shared channel.

### Background Art

As a third-generation high-speed transmission technology, a technology for realizing a high-speed packet communication using a shared channel used in HSDPA (High Speed Downlink Packet Access) or HDR (High Data Rate) is known. Unlike an dedicated channel, a shared channel is a channel shared by a plurality of users on a time-division basis and is intended to transmit data to a single user for a predetermined time and transmit pilot channels using dedicated channels.

A transmission technology using such a shared channel is also applicable to an OFDM-CDMA (Orthogonal Frequency Division Multiplex-Code Division Multiple Access) transmission which is promising as a fourth-generation mobile communication technology.

Here, a communication terminal which carries out a high-speed packet communication using a shared channel will be explained. FIG.1 shows an example of a cell configuration. Base stations 11 to 15 are provided in the center of their respective cells. Communication terminals 21 and 22 exist in the cell of the base station 11 and are carrying out a high-speed packet communication with the base station 11. The communication terminal 21 is located in the center of the cell and is carrying out a communication from a position close to the base station 11. The communication terminal 22 is located near the cell edge and is carrying out a communication from a position far from the base station 11. Examples of reception frame configuration of the communication terminals 21 and 22 will be shown in FIG.2 and FIG.3.

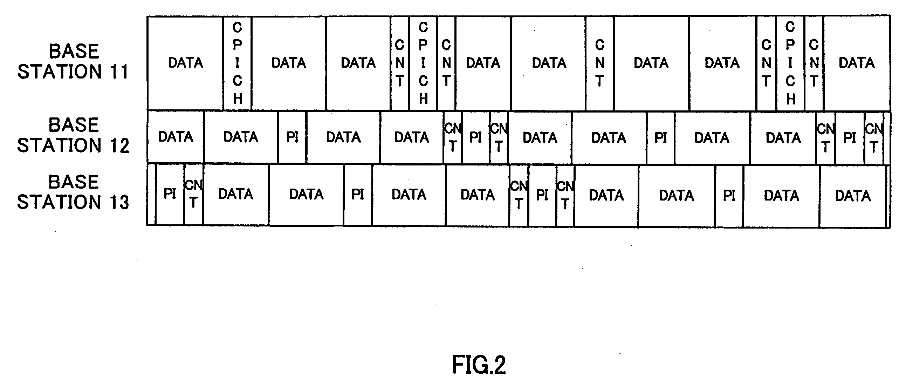

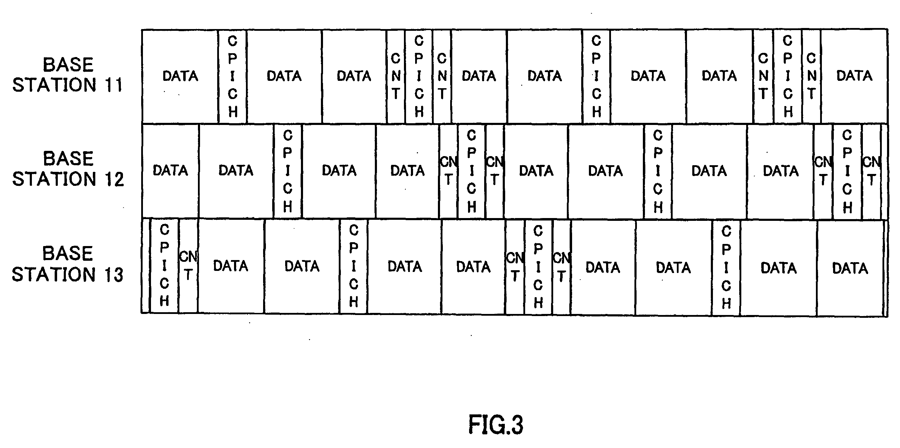

FIG.2 is an example of a reception frame configuration of the communication terminal 21. DATA denotes data to be sent in a high-speed packet communication, CPICH and PI denote common pilot channels and CNT denotes a control signal. The length in the vertical-axis direction expresses a proportion of reception power of a signal sent from each base station apparatus with respect to total reception power and it is appreciated that the reception power sent from the base station 11 is the highest. On the other hand, FIG.3 shows an example of a reception frame configuration of the communication terminal 22. DATA, CPICH and CNT denote the same things as those in FIG.2. Furthermore, the length in the vertical-axis direction also expresses the proportion of reception power in the same way as in FIG. 2. Since the communication terminal 22 is located at the cell edge, signals sent from the respective base stations have substantially the same reception power. However, DATA in FIG. 2 and FIG. 3 are not necessarily the data desired by the communication terminals 21 and 22.

The communication terminal uses CPICH, etc., of the frame configurations shown in FIG.2 and FIG.3 to conduct a cell search and detects a cell at the start of a communication or at the time of handover.

However, as described above, the method of transmitting pilot channels by time-multiplexing them results in a lower spreading factor (SF) compared to a W-CDMA (Wideband-Code Division Multiple Access) system, etc., in which pilot channels are always sent using different channels. Thus, while there is a possibility that data reception quality may be secured if handover is carried out to another cell, with a time multiplexing type pilot channel, it is difficult to detect another cell with low signal power and the performance of detection of the other cell (other cell search) deteriorates, leading to deterioration of the handover performance.

The communication terminal close to the cell edge in particular goes far from the base station and the reception quality is likely to deteriorate. For this reason, with a best effort type communication, there is a problem that shared channels are hardly assigned and deterioration of the reception performance of the communication terminal that exists at the cell edge becomes noticeable in addition to the above described deterioration of the handover performance.

### Disclosure of Invention

It is an object of the present invention to allow a CDMA system in which data is time-multiplexed with common known signals and transmitted through the same channel to receive the common known signals with sufficient reception quality.

### Brief Description of Drawings

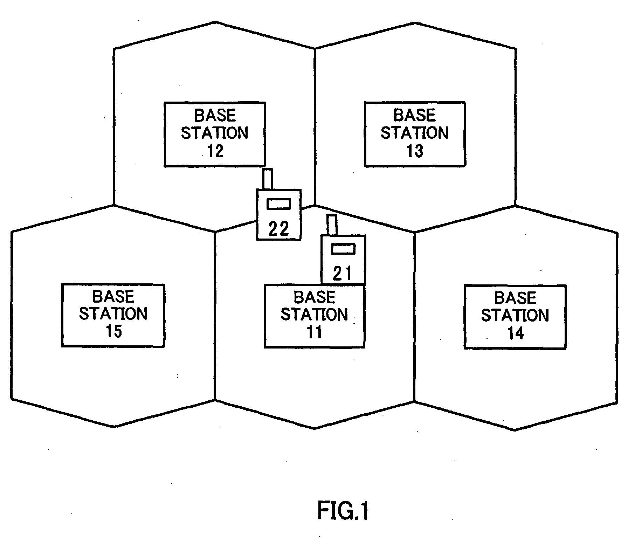

FIG.1 is an example of a cell configuration;
FIG.2 is a configuration example of a reception frame of a communication terminal;
FIG.3 is another configuration example of a reception frame of a communication terminal;

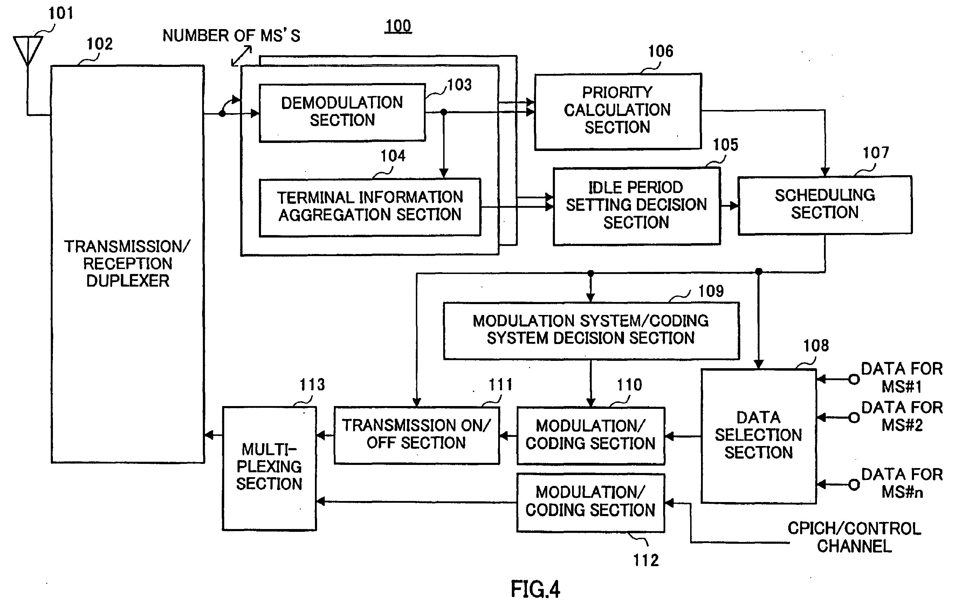

FIG.4 is a block diagram showing a configuration of a base station according to Embodiment 1 of the present invention;

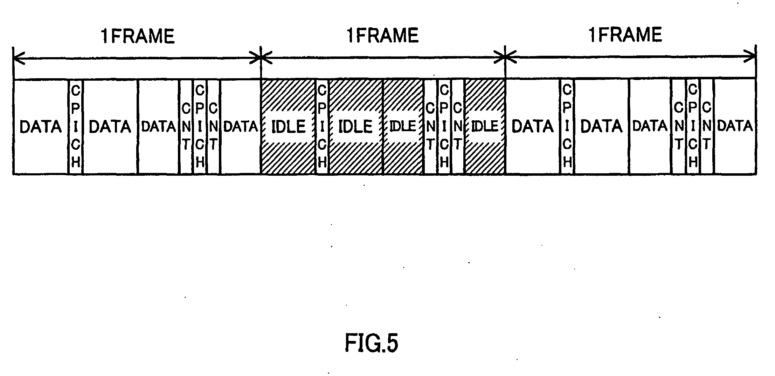

FIG. 5 is a conceptual diagram of IDLE period setting;

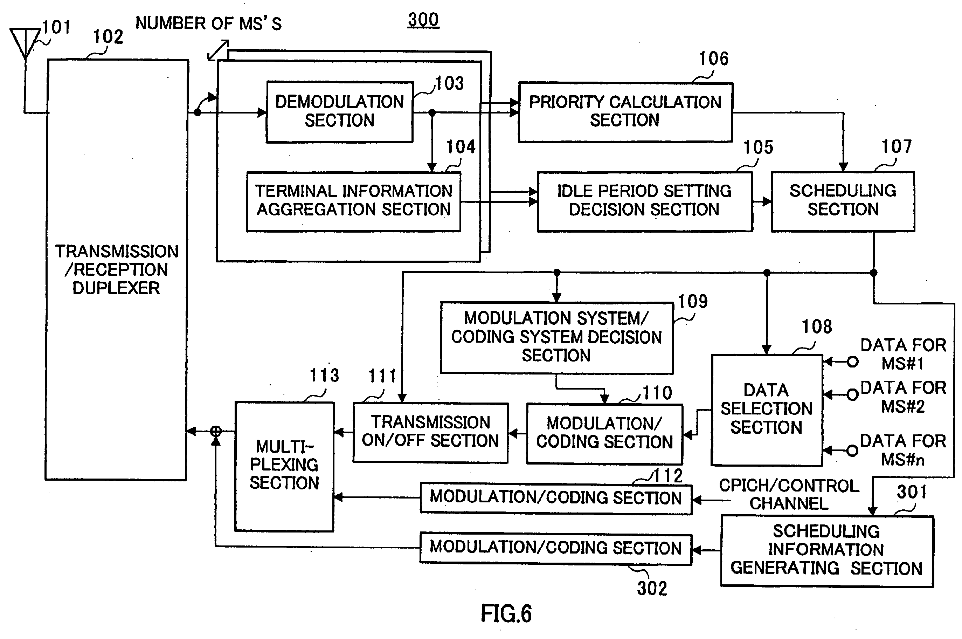

FIG.6 is a block diagram showing a configuration of a base station according to Embodiment 2 of the present invention;

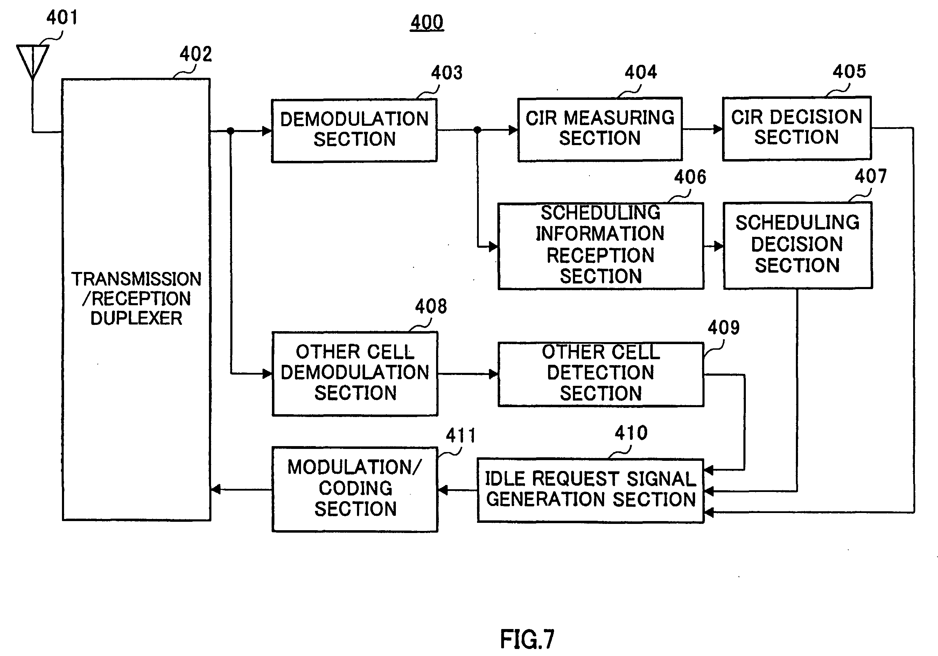

FIG.7 is a block diagram showing a configuration of a communication terminal according to Embodiment 3 of the present invention;

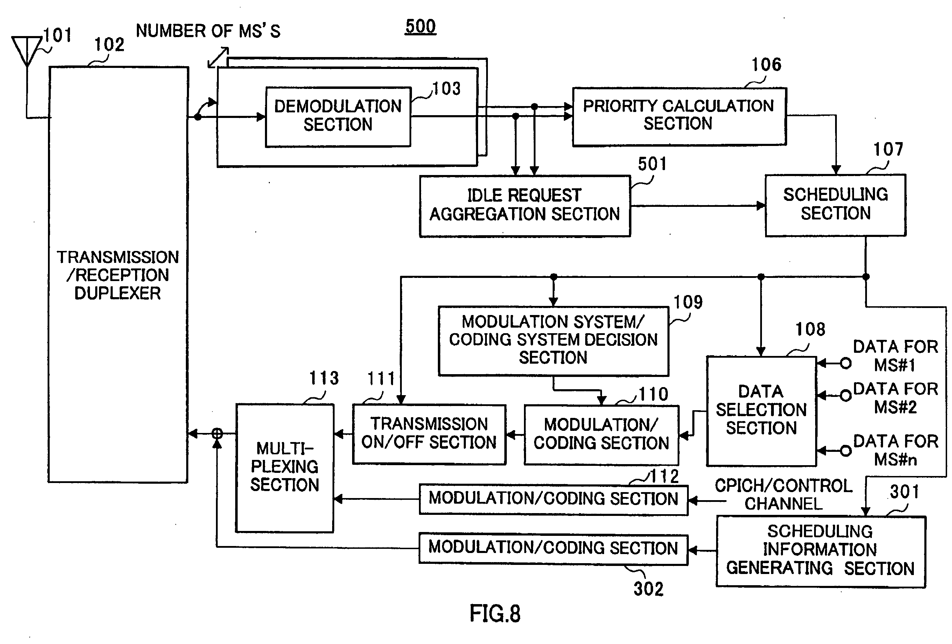

FIG.8 is a block diagram showing a configuration of a base station according to Embodiment 3 of the present invention;

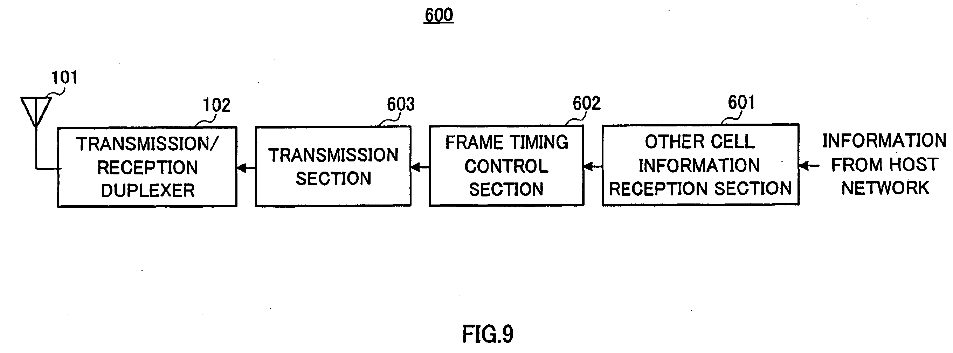

FIG.9 is a block diagram showing a configuration of a base station according to Embodiment 4 of the present invention;

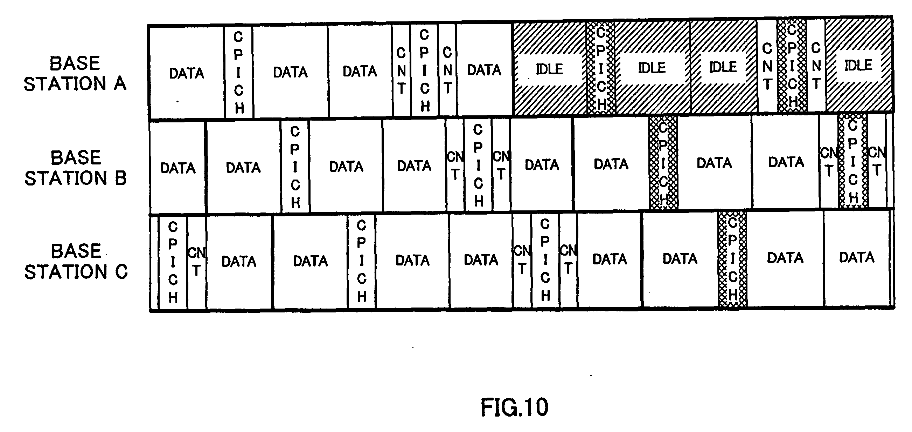

FIG.10 is a conceptual diagramof IDLE period setting in the frame configuration of the base station according to Embodiment 4 of the present invention;

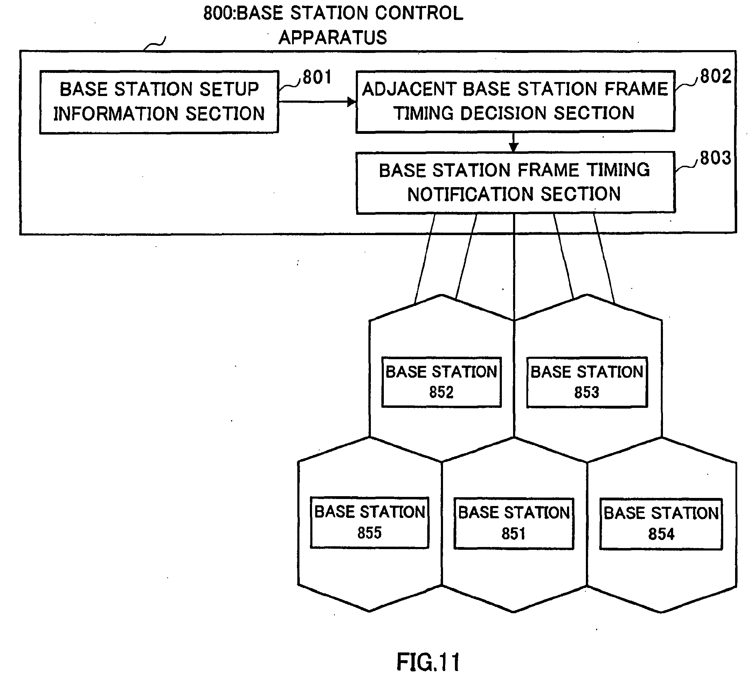

FIG.11 is a conceptual diagram showing a relationship between a base station control apparatus and base stations according to Embodiment 5 of the present invention; and

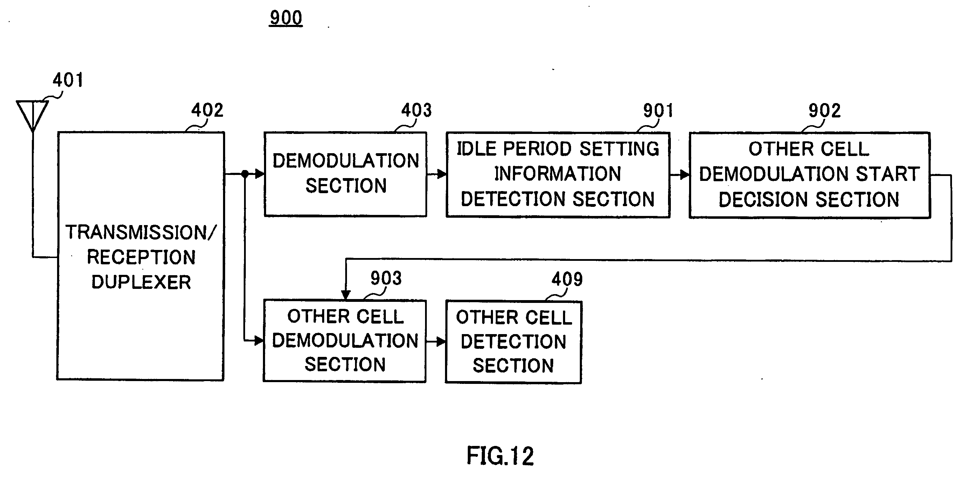

FIG.12 is a block diagram showing a configuration of a communication terminal according to Embodiment 6 of the present invention.

### Best Mode for Carrying out the Invention

An essence of the present invention is that when a communication terminal at a cell edge is unable to obtain sufficient reception quality and also unable to detect another cell, the base station of the own cell schedules a period during which data transmission to this communication terminal is stopped. In the following explanations, the period during which data transmission to this communication terminal is stopped (non-transmission period) refers to a period during which data is not sent in units in which a shared channel is assigned to the communication terminal and will be called an "IDLE period."

With reference now to the attached drawings, embodiments of the present invention will be explained in detail below.

### (Embodiment 1)

FIG.4 is a block diagram showing a configuration of a base station 100 according to Embodiment 1 of the present invention. In this figure, a transmission/reception duplexer 102 applies predetermined radio reception processing to a signal received (received signal) through an antenna 101 and outputs it to a demodulation section 103. Furthermore, the transmission/reception duplexer 102 applies predetermined radio transmission processing to a signal output from a multiplexing section 113 and sends it through the antenna 101.

The demodulation section 103 performs demodulation processing on the received signal and performs demodulation processing on a CIR (Carrier to Interference Ratio) information which is reception quality measured at a communication terminal. In this embodiment, the CIR is used as information to determine priority of a communication terminal. The demodulated CIR value of the communication terminal is output to a terminal information aggregation section 104 and a priority calculation section 106.

The terminal information aggregation section 104 as quality deciding means acquires the CIR value of the communication terminal demodulated at the demodulation section 103 and decides the CIR value by comparing it with a predetermined threshold. Then, based on this decision result, it is decided whether the communication terminal exists near a cell edge or not. That is, it is decided whether handover should be carried out or not. For example, when the CIR value is lower than the threshold, the communication terminal is far from the base station 100 and it is decided that handover should be carried out. The decision result is output to an IDLE period setting decision section 105. The same number of demodulation sections 103 and terminal information aggregation sections 104 are provided as communication terminals with which the base station 100 can communicate.

When the terminal information aggregation section 104 decides that there are at least a predetermined number of communication terminals which should carry out handover (communication terminals before handover starts), the IDLE period setting decision section 105 decides to set an IDLE period (period during which no data is sent to the communication terminal) and when the number of communication terminals which should carry out handover falls short of the predetermined number, the IDLE period setting decision section 105 decides not to set an IDLE period. This decision result is output to a scheduling section 107.

A priority calculation section 106 decides priority for all communication terminals in high-speed packet communications based on the CIR value of each communication terminal output from the demodulation section 103. The decided result is output to the scheduling section 107. Here, priority refers to priority order to assign a shared channel.

The scheduling section 107 as the non-transmission period setting means determines the order of communication terminals which perform high-speed packet communications based on the priority information output from the priority calculation section 106 and the modulation system and coding system, etc., of information to be sent to the communication terminals. Furthermore, the scheduling section 107 also performs scheduling for setting an IDLE period based on the decision result output from the IDLE period setting decision section 105. This scheduling result is output to a data selection section 108, a modulation system/coding system determination section 109 and a transmission ON/OFF section 111. Here, "scheduling" refers to determining the assignment of a shared channel according to priority and "scheduling" according to the present invention also includes a setting of an IDLE period.

The data selection section 108 selects data to be sent to a communication terminal which performs a high-speed packet communication determined by the scheduling section 107 and outputs it to a modulation/coding section 110.

The modulation system/coding system determination section 109 determines the modulation system and coding system according to the information determined by the scheduling section 107 and instructs the modulation/coding section 110 of the determined modulation system and coding system.

The modulation/coding section 110 modulates and codes the data output from the data selection section 108 according to the modulation system and coding system instructed from the modulation system/coding system determination section 109 and outputs the modulated signal to the transmission ON/OFF section 111.

When the IDLE period determined by the scheduling section 107 is set, the transmission ON/OFF section 111 as the transmission controlling means does not output the modulated signal output from the modulation/coding section 110 to a multiplexing section 113 during that period (transmission OFF). Furthermore, when the IDLE period is not set, the transmission ON/OFF section 111 outputs the modulated signal to the multiplexing section 113 (transmission ON). That is, it performs switching control as to whether or not to transmit the modulated signal according to the presence/absence of the setting of the IDLE period.

A modulation/coding section 112 modulates and codes a CPICH (common pilot channel) and a control channel and outputs the modulated CPICH and control channel to the multiplexing section 113.

The multiplexing section 113 time-multiplexes the signal output from the transmission ON/OFF section 111, CPICH modulated by the modulation/coding section 112 and the control channel and outputs the multiplexed signal to the transmission/reception duplexer 102.

Then, the operation of the base station 100 in the above described configuration will be explained. A communication terminal which is communicating with the base station 100 notifies the base station 100 of the measured CIR value as terminal information.

In the base station 100, the CIR value of the communication terminal notified from the communication terminal is demodulated by the demodulation section 103 and the demodulated signal is output to the terminal information aggregation section 104 and priority calculation section 106.

The CIR value of the communication terminal output from the demodulation section 103 is output to the terminal information aggregation section 104 and subjected to a threshold decision whereby the CIR value is compared with a predetermined threshold. When the CIR value is lower than a predetermined threshold, the communication terminal is likely to exist near the cell edge. Therefore, this decision result becomes criteria as to whether the communication terminal should carry out handover or not. At this time, instead of deciding with only one CIR value, it is also possible to use an average over a certain section. This decision result is output to the IDLE period setting decision section 105.

When there are at least a predetermined number of communication terminals decided by the terminal information aggregation section 104 as ones that should carry out handover, the IDLE period setting decision section 105 decides that an IDLE period should be set. Here, the number of communication terminals which should carry out handover is considered because once an IDLE period is provided, packet data for high-speed packet communication can no longer be sent during that period. That is, when there are many communication terminals with high reception quality, it is possible to improve throughput by intensively carrying out high-speed packet communications on these communication terminals, but setting an IDLE period for fewer communication terminals may lead to a reduction of throughput. On the contrary, when reception quality of many communication terminals is low, the frequency with which high-speed packet communications are carried out with these communication terminals increases, but the retransmission frequency also increases because of the low reception quality and since the throughput is low in the first place, the reduction of throughput is no problem even if the IDLE period is set.

The communication terminal located near the cell edge cannot detect another cell (other cell search) accurately not only because it is hardly assigned a shared channel but also because the SF (Spreading Factor) of CPICH of the other cells is small and power is weak. Therefore, that communication terminal cannot carry out handover, either. For this reason, when there are at least a predetermined number of communication terminals which should carry out handover, the base station of the own cell sets an IDLE period as described above and the communication terminal can thereby receive CPICH of the other cell during that IDLE period. If CPICH of the other cell can be received with high accuracy, the other cell can be detected; hence handover can be carried out.

Furthermore, when a communication terminal requesting services such as a high-speed rate exists in the cell and is carrying out a favorable communication, the IDLE period setting decision section 105 may also be adapted so as to decide to set an IDLE period for the communication terminal decided by the terminal information aggregation section 104 to be the one that should carry out handover. This is because the communication terminal requesting services such as a high-speed rate has higher priority and the communication terminal that should carry out handover is hardly assigned a shared channel, and the possibility that a shared channel will be assigned increases if it carries out handover to the other cell. When there is a communication terminal requesting services such as a high-speed rate exists among the communication terminals which should carry out handover, the IDLE period setting decision section 105 also sets an IDLE period for this communication terminal.

The priority calculation section 106 determines priority for each communication terminal based on the CIR value of each communication terminal output from the demodulation section 103, that is, which communication terminal should be assigned a shared channel with high priority. Since the shared channel is a channel shared by a plurality of communication terminals, throughput can be improved by assigning channels to communication terminals having high priority, that is, communication terminals having a good propagation environment and high reception quality.

The scheduling section 107 assigns a shared channel to the communication terminal which performs a high-speed packet communication based on the priority output from the priority calculation section 106 and also sets an IDLE period based on the signal output from the IDLE period setting decision section 105.

When the scheduling section 107 sets the IDLE period, the transmission ON/OFF section 111 stops the operation of outputting the signal output from the modulation/coding section 110 to the multiplexing section 113 during an IDLE period. The multiplexing section 113 time-multiplexes the packet data, CPICH and control channel, and therefore no data is sent during the IDLE period.

FIG. 5 is a conceptual diagram of IDLE period setting. In this diagram, DATA denotes data which becomes a target for a high-speed packet communication. CPICH denotes a common pilot, CNT denotes control information and IDLE indicates that no information is sent. Adopting such a frame configuration allows CPICH of the other cell to be received accurately during an IDLE period during which no data is sent. This reason will be explained briefly below.

When data is received from the own cell, CPICH of the other cell has smaller SF and weaker signal power than those of a conventional W-CDMA, and therefore the data from the own cell constitutes interference. Because of this, the communication terminal cannot receive CPICH of the other cell accurately. Thus, by setting an IDLE period during which the own cell cannot send data, it is possible to reduce interference with CPICH of the other cell. This allows the communication terminal located at the cell edge which has low reception quality and cannot receive data to receive CPICH of the other cell with sufficient reception quality during the set IDLE period. Therefore, the communication terminal can detect the other cell using CPICH and carry out handover to the other adjacent cell and thereby receive data from the other cell. Since the communication terminal carries out up to handover processing during the IDLE period, it receives no interference from the data sent from the own cell.

Then, when focused on the frame in FIG.5 for which the IDLE period is set, CPICH and CNT other than DATA are sent at normal timing as in the case of the frames before and after. This is because doing so is essential to providing stable communications for the communication terminal that exists in the cell from the standpoints of synchronization and channel estimation, etc. Therefore, when an IDLE period is set, only the DATA sections are not sent as shown in FIG.5.

Thus, according to this embodiment, when the communication terminal that carries out a high-speed packet communication using a shared channel is located at the cell edge and it is difficult to assign the shared channel to this communication terminal, the own cell sets an IDLE period during which nothing is sent. This allows the communication terminal to receive CPICH of the other cell accurately during the IDLE period and improve the accuracy of detecting the other cell.

This embodiment has been explained using the CIR value measured by the communication terminal as terminal information, but instead of using the CIR value it is also possible to use a path loss value indicating an amount of attenuation of power in the downlink propagation path or position information, etc., based on pilot signals sent from the base station. In short, any signal (parameter) is acceptable if it at least allows estimation of the presence of a communication terminal near the cell edge.

Furthermore, a CIR value is used as the standard for calculation of priority, but the present invention is not limited to this and can use the degree of importance of service contents (service class) according to the difference in the real-time characteristic such as priority information, voice and mail notified from a host network or use the CIR value together with them.

### (Embodiment 2)

This embodiment will describe a case where information scheduled by a base station is notified to a communication terminal.

FIG.6 is a block diagram showing a configuration of a base station 300 according to Embodiment 2 of the present invention. However, in this figure, parts common to those in FIG. 4 are assigned the same reference numerals as those in FIG.4 and detailed explanations thereof will be omitted. FIG.6 differs from FIG.4 in that it is provided with a scheduling information generation section 301 and a modulation/coding section 302.

The scheduling information generation section 301 as the non-transmission period setting information generating means generates scheduling information and outputs it to the modulation/coding section 302 'to notify the scheduling result determined by the scheduling section 107 to a communication terminal that exists in the own cell.

The modulation/coding section 302 as the transmitting means performs coding and modulation on the scheduling information generated by the scheduling information generation section 301 and sends it to the communication terminal that exists in the own cell through the transmission/reception duplexer 102 and antenna 101.

Adopting such a configuration, the IDLE period setting timing is notified to the communication terminal that exists in the own cell. The communication terminal that receives the frame in which the IDLE period is set can know beforehand that the IDLE period is assigned, and therefore by allowing CPICH to be obtained only during the IDLE period, it is possible to efficiently demodulate and detect other cell signals. Furthermore, the scheduling information is sent to the communication terminal and the communication terminal calculates the frequency with which the communication terminal itself is assigned from the scheduling information and can thereby know the priority schematically.

FIG.6 describes that the control information to be sent includes all scheduling information of each communication terminal, but the present invention can also be adapted in such a way that each dedicated channel includes information indicating the IDLE period.

### (Embodiment 3)

This embodiment will describe the case where a communication terminal requests an IDLE period from a base station.

FIG.7 is a block diagram showing a configuration of a communication terminal 400 according to Embodiment 3 of the present invention. In this figure, a transmission/reception duplexer 402 applies predetermined radio reception processing to a signal received (received signal) through an antenna 401 and outputs it to a demodulation section 403 and other cell demodulation section 408. The transmission/reception duplexer 402 also applies predetermined radio transmission processing to the signal output from the modulation/coding section 411 and sends it through the antenna 401.

The demodulation section 403 performs demodulation processing on the received signal and outputs the demodulated received signal to a CIR measuring section 404 and a scheduling information reception section 406. The CIR measuring section 404 as the reception quality measuring means measures a CIR using CPICH of the received signal demodulated by the demodulation section 403 and outputs the measurement result to the CIR decision section 405. The CIR decision section 405 as the reception quality deciding means compares the CIR measured by the CIR measuring section 404 with a predetermined threshold and outputs the decision result to the IDLE request signal generation section 410.

The scheduling information reception section 406 as the non-transmission period detecting means extracts scheduling information at the base station from the received signal demodulated by the demodulation section 403 and outputs it to a scheduling decision section 407. The scheduling decision section 407 decides whether the communication terminal 400 has been scheduled or not and outputs the decision result to the IDLE request signal generation section 410.

The other cell demodulation section 408 demodulates other cell information (CPICH, etc., of other cell) from the received signal output from the transmission/reception duplexer 402, performs CIR measurement, etc., and outputs the demodulated other cell information and measured CIR value to the other cell detection section 409. The other cell detection section 409 detects the other cell based on the other cell information demodulated by the other cell demodulation section 408, decides whether the other cell has been detected or not and outputs the decision result to the IDLE request signal generation section 410.

When the decision result from the CIR decision section 405 is smaller than a predetermined threshold, the decision result from the scheduling decision section 407 indicates that the communication terminal 400 is not assigned and the detection result from the other cell detection section 409 indicates that the other cell has not been detected, the IDLE request signal generation section 410 as the non-transmission request signal generating means requests the base station to set an IDLE period. When an IDLE period setting request is sent, the request signal is generated and output to the modulation/coding section 411. The modulation/coding section 411 as the transmitting means performs coding/modulation on the request signal generated by the IDLE request signal generation section 410 and outputs it to the transmission/reception duplexer 402.

Then, the operation of the communication terminal 400 in the above described configuration will be explained. The signal sent from the base station is received by the transmission/reception duplexer 402 through the antenna 401, subjected to predetermined radio reception processing and output to the demodulation section 403. The demodulation section 403 demodulates the received signal output from the transmission/reception duplexer 402 and outputs the demodulated signal to the CIR measuring section 404 and the scheduling information reception section 406.

The CIR measuring section 404 measures a CIR using pilot signals sent from the base station and outputs the measurement result to the CIR decision section. The CIR decision section 405 decides whether the CIR value measured by the CIR measuring section 404 is a CIR value which is sufficient for scheduling at the base station or not and the decision result is output to the IDLE request signal generation section 410.

The scheduling information reception section 406 acquires the scheduling information sent from the base station and decides whether the communication terminal 400 has been assigned or not and outputs the decision result to the scheduling decision section 407. The scheduling decision section 407 measures the proportion of the communication terminal 400 which has been scheduled and if the measurement result shows that the communication terminal 400 has been scheduled only by a predetermined proportion or below, a signal indicating the information is output to the IDLE request signal generation section 410.

The other cell demodulation section 408 demodulates the other cell information of the received signal output from the transmission/reception duplexer 402 and performs CIR measurement, etc. The demodulated other cell information and the measured CIR value are output to the other cell detection section 409. The other cell detection section 409 detects the other cell based on the other cell information demodulated by the other cell demodulation section 408 and outputs the detection result as to whether the other cell has been detected or not to the IDLE request signal generation section 410.

When it is decided that the communication terminal 400 cannot obtain sufficient reception quality and the other cell has not been detected from the decision result from the CIR decision section 405, the decision result from the scheduling decision section 407 and the detection result from the other cell detection section 409, the IDLE request signal generation section 410 generates a signal to request the base station to set an IDLE period. The request signal generated is subjected to coding and modulation at the modulation/coding section 411 and sent through the transmission/reception duplexer 402 and antenna 401.

FIG.8 is a block diagram showing a configuration of a base station 500 according to Embodiment 3 of the present invention. However, in FIG.8, parts common to those in FIG.6 are assigned the same reference numerals as those in FIG. 6 and detailed explanations thereof will be omitted. FIG.8 differs from FIG. 6 in that the terminal information aggregation section 104 and the IDLE period setting decision section 105 have been deleted and an IDLE request aggregation section 501 is provided.

The IDLE request aggregation section 501 receives an IDLE request signal sent from the above described communication terminal 400 and requests the scheduling section 107 to set an IDLE period based on the IDLE request signal.

Thus, according to this embodiment, when the communication terminal located at the cell edge cannot secure sufficient reception quality and cannot detect the other cell, a request signal for requesting the base station to generate an IDLE period is generated and sent to the base station and the base station can thereby reliably set an IDLE period for the communication terminal even when it does not keep track of the communication terminal for which the IDLE period needs to be set.

### (Embodiment 4)

This embodiment will describe a case where a frame timing of another adjacent cell is received from a host network and the frame timing of the own cell is controlled based on the information.

FIG.9 is a block diagram showing a configuration of a base station 600 according to Embodiment 4 of the present invention. In this figure, another cell information reception section 601 receives information on the frame timing at which another adjacent cell sends CPICH, etc., from a host network (RNC, etc., in the case of W-CDMA) and outputs it to the frame timing control section 602.

The frame timing control section 602 controls the frame timing in such a way that the frame timing of the other cell output from the other cell information reception section 601 is shifted from the frame timing of the own cell.

The transmission section sends control information such as CPICH to be sent to the communication terminal at the frame timing controlled by the frame timing control section 602 and sends the data.

FIG. 10 is a conceptual diagram of IDLE period setting in the frame configuration of the base station according to Embodiment 4 of the present invention and assumes a case where data is received at the position corresponding to the communication terminal 22 shown in FIG.1. In this figure, when attention is focused on, for example, CPICH, it is appreciated that the frame timings of base stations A to C are shifted and it is possible to easily receive CPICHs of the base station B and base station C during the IDLE period set by the base station A.

Adopting such a configuration causes the timing at which CPICH of the own cell is sent to be shifted from the timing at which CPICH of the adjacent other cell is sent, and therefore it is possible to accurately receive CPICH of the other cell by setting the data transmission section of the own cell to an IDLE period.

### (Embodiment 5)

This embodiment will describe a case where a host network controls frame timings of all base stations under its control.

FIG.11 is a conceptual diagram showing a relationship between a base station control apparatus 800 and base stations according to Embodiment 5 of the present invention. The base station control apparatus 800 controls a plurality of base stations 851 to 855. Abase station setup information section 801 stores setup information, etc., of the base stations and is able to know the cell configuration. An adjacent base station frame timing decision section 802 acquires the setup information, etc., of the base stations from the base station setup information section 801, decides adjacent base stations and decides frame timings of the respective base stations. This provides the frame timing shown in FIG. 10 explained in Embodiment 4. The base station frame timing notification section 803 notifies the respective base stations of the frame timings determined by the adjacent base station frame timing decision section 802.

Adopting such a configuration allows the base station control apparatus (host network) to control timings at which the respective base stations send frames and allows a communication terminal located at the cell edge to accurately receive CPICHs of other cells during an IDLE period by shifting the CPICH transmission timings from the base stations.

### (Embodiment 6)

This embodiment will describe a case where other cell detection start timings are decided based on IDLE period setting information sent from a base station.

FIG.12 is a block diagram showing a configuration of a communication terminal 900 according to Embodiment 6 of the present invention. However, in FIG.12, parts common to those in FIG.7 are assigned the same reference numerals as those in FIG.7 and detailed explanations thereof will be omitted.

An IDLE period setting information detection section 901 as the non-transmission period setting information detecting means receives information notifying that a base station has set an IDLE period and detects IDLE period setting information assigned to a communication terminal 900.

When the IDLE period setting information detection section 901 detects that an IDLE period has been set, another cell demodulation start decision section 902 decides timings for starting demodulation of another cell signals or CIR measurement of the other cell, etc.

Another cell demodulation section 903 carries out demodulation on other cell information and CIR measurements of the other cell, etc., at the timings decided by the other cell demodulation start decision section 902 and outputs the demodulated other cell information and measured CIR value to the other cell detection section 409.

Adopting such a configuration allows the communication terminal 900 to know the timing at which the base station set the IDLE period, thereby eliminates the need for always demodulating or detecting signals of the other adjacent cell and allows the signal of the other cell to be demodulated and detected after the start of demodulating the other cell signal is decided, making it possible to efficiently demodulate and detect the other cell.

The above described embodiments have questioned a communication terminal located at the cell edge and focused on between cells, but the present invention is not limited to this and similar processing is also applicable to between sectors in a cell.

As described above, according to the present invention, when a communication terminal carrying out a high-speed packet communication using a shared channel is located at a cell edge and cannot obtain sufficient reception quality or detect other cells, the base station of the own cell schedules an IDLE period during which no data is sent to this communication terminal. When it is not possible to secure sufficient reception quality through a high-speed packet communication, this makes it possible to receive other cell information with little interference during an IDLE period instead of receiving data which becomes interference when other cell signals are received and thereby improve the accuracy of detecting other cells. Thus, the present invention facilitates handover to another detected cell, and can thereby prevent deterioration of the reception performance of the communication terminal located at the cell edge.

This application is based on the Japanese Patent Application No. 2002-55422 filed on March 1, 2002, entire content of which is expressly incorporated by reference herein.

### Industrial Applicability

The present invention is preferably applicable to a high-speed packet communication using a shared channel.

## Claims

1. A CDMA-based base station apparatus using a shared channel, comprising:
a non-transmission period setting section that sets a non-transmission period during which transmissions of common known signals, control signals and data signals are stopped; and
a transmission control section that controls transmission in such a way that data transmission is stopped for only a period set by said non-transmission period setting section.

2. The base station apparatus according to claim 1, further comprising a quality decision section that keeps track of reception quality of the shared channel of the communication terminal apparatus and decides whether predetermined reception quality is satisfied or not, wherein when said quality decision section decides that the predetermined reception quality is not satisfied, said non-transmission period setting section sets a non-transmission period before the communication terminal apparatus which does not secure the predetermined reception quality starts handover.

3. The base station apparatus according to claim 2, wherein said non-transmission period setting section makes a threshold decision by comparing the number of communication terminal apparatuses which do not secure the predetermined reception quality with a predetermined threshold and sets a non-transmission period when the result of the threshold decision is equal to or greater than the threshold.

4. The base station apparatus according to claim 1, further comprising:
a non-transmission period setting information generation section that generates information for notifying the non-transmission period set by said non-transmission period setting section to said communication terminal apparatus; and
a transmission section that sends the information generated by said non-transmission period setting information generation section to said communication terminal apparatus.

5. The base station apparatus according to claim 1, further comprising a non-transmission request reception section that receives a signal requesting the setting of a non-transmission period from said communication terminal apparatus and requests said non-transmission period setting section to set a non-transmission period.

6. The base station apparatus according to claim 1, further comprising:
another cell information reception section that receives frame timing information of another adjacent cell; and
a frame timing control section that multiplexes the transmission timing of the other cell common known signal with the non-transmission period based on said frame timing information.

7. A communication terminal apparatus comprising:
another cell demodulation section that demodulates another cell signal within a non-transmission period set by a base station apparatus; and
another cell detection section that detects another cell based on said demodulated other cell signal,
wherein handover is carried out to said other cell detected within said non-transmission period.

8. The communication terminal apparatus according to claim 7, further comprising:
a non-transmission period setting information detection section that receives and detects non-transmission period setting information sent from the base station apparatus; and
another cell demodulation start decision section that decides the timing for starting demodulation of the other cell signal based on said non-transmission period setting information,
wherein said other cell signal demodulation section starts demodulation of the other cell signal at the demodulation start timing of said decided other cell signal.

9. The communication terminal apparatus according to claim 7, further comprising:
a reception quality measuring section that measures the reception quality of the shared channel sent from the base station apparatus;
a reception quality decision section that decides whether said measured reception quality satisfies predetermined reception quality or not;
a non-transmission period detection section that receives non-transmission period setting information sent from the base station apparatus and detects whether said non-transmission period has been set or not;
a non-transmission request signal generation section that generates a signal requesting the base station apparatus to set a non-transmission period when said reception quality does not satisfy the predetermined reception quality, said non-transmission period is not detected and said other cell detection section cannot detect the other cell;
a transmission section that sends the non-transmission request signal to the base station.

10. A base station control apparatus that controls a plurality of base station apparatuses, comprising:
a frame timing decision section that decides frame timings by shifting transmission timings of common known signals sent from the adjacent base station apparatuses based on position information of said plurality of base station apparatuses under control; and
a frame timing notification section that notifies said decided frame timings to said plurality of base station apparatuses under control.

11. ACDMA-based radio communication method using a shared channel, comprising the steps of:
setting a non-transmission period during which transmissions of common known signals, control signals and data signals are stopped; and
carrying out control in such a way that data transmission is stopped for only said non-transmission period set.
